# FASCICULE DE BREVET EUROPEEN

(11) **EP 2 028 137 B1**
(45) Date de publication et mention de la délivrance du brevet: **11.05.2016**
(21) Numéro de dépôt: 08162839.8
(22) Date de dépôt: 22.08.2008
(51) Int. Cl.: B65F 1/14, B60G 1/02

(54) **Bac de collecte de déchets comprenant un réducteur de bruit à ressort**
Müllsammelbehälter mit gefederter Geräuschdämpfungseinrichtung
Refuse collection receptacle comprising a spring-mounted noise reducer

(30) Priorité: 24.08.2007 DE 102007040332
(43) Date de publication de la demande: 25.02.2009
(73) Titulaire: SULO Umwelttechnik GmbH, 32051 Herford (DE)
(72) Inventeur: Igelbrink, Michael, 49170 Hagen am Teutoburger Wald (DE); Wolff, Horst, 32805 Horn Bad Meinberg (DE); Pautsch, Gunter, 32694 Dörentrup (DE); Fröhlingsdorf, Udo, 57462 Olpe (DE)
(74) Mandataire: Remy, Vincent Noel Paul

(56) Documents cités:
- EP-A- 0 726 172
- EP-A- 1 460 004
- DE-U-202007 000 629

## Description

La présente invention concerne un bac de collecte de déchets comprenant un corps, aussi appelé cuve, et au moins un axe, notamment un axe rigide, disposé à l'extrémité inférieure du corps, une roue étant montée mobile en rotation à chaque extrémité de l'axe, le corps présentant au moins deux orifices dans lesquels est inséré l'axe.

De tels bacs sont connus dans l'état de l'art et sont proposés par exemple dans une capacité de 240 litres ou moins, pour éliminer des ordures ménagères produites. Ces bacs comprennent généralement un corps d'une extension longitudinale essentiellement verticale, un couvercle supérieur rabattable autour d'une charnière, et deux roues disposées à l'extrémité inférieure du corps du bac, pour pouvoir transporter facilement le bac.

Il est prévu à cet effet de munir le bac d'un axe rigide réalisé d'un seul tenant, l'axe supportant une roue à chacune de ses extrémités, la roue étant montée mobile en rotation sur l'axe. L'axe peut être monté mobile en rotation par rapport au corps du bac ou en être solidaire.

L'invention décrite ici n'est pas limitée à des bacs qui comprennent un unique axe muni de deux roues, mais est également applicable à des bacs comprenant plusieurs axes et d'une capacité ou d'un type de construction autres que préalablement cités.

Il est en outre connu dans l'état de l'art d'insérer et de fixer l'axe dans au moins deux orifices du corps du bac. Dans un mode de réalisation connu, l'orifice peut être alors disposé dans une ou plusieurs nervures, qui dépassent en direction du bas de la partie inférieure du corps du bac.

L'orifice peut être fermé en bordure, par exemple sous forme d'un trou ou d'un alésage circulaire ou être ouvert en direction de l'extérieur. Dans le sens de l'invention, il faut entendre par orifice à la fois des orifices prévus pour maintenir en place l'axe sur le bac, donc pour le fixer, et également des orifices prévus uniquement pour soutenir l'axe.

Dans de tels modes de réalisation de bacs, un problème connu est que l'axe présente un jeu à l'intérieur de l'orifice, et que l'axe n'a donc aucun appui fixe par rapport à l'orifice, notamment en périphérie de l'orifice. Par ailleurs, un tel jeu peut apparaître au cours du temps, par exemple par usure, entre l'axe et l'orifice du fait que l'axe est animé d'un mouvement de va-et-vient à l'intérieur d'un tel orifice. Ainsi, lors du transport du bac sur des parcours accidentés, l'axe peut vibrer et battre contre le bord intérieur de l'orifice ce qui produit une forte nuisance acoustique du fait que le corps du bac forme une caisse de résonance. On entend par jeu entre l'axe et l'orifice qu'un espace existe autour dé l'axe entre l'axe et l'orifice, lorsque l'axe est centré dans l'orifice.

Des propositions ont déjà été présentées dans l'état de l'art pour résoudre ce problème, par exemple en entourant totalement l'axe d'un matériau élastique en forme de manchon de sorte qu'il ne se produit pas de contact direct entre l'axe et le bord de l'orifice. Le matériau élastique est en effet disposé entre l'axe et le bord intérieur de l'orifice pour obtenir un amortissement. Le document DE 20 2007 000 629 U1, par exemple, décrit une telle solution.

Le document EP 0 726 172 divulgue en outre un système analogue à celui décrit ci-dessous, dans lequel un ressort pousse un manchon dans l'orifice de façon à éviter que le bac présente un jeu entre l'axe et le bord intérieur de l'orifice.

L'invention a pour objectif de fournir un bac de collecte de déchets du type cité en introduction, qui soit simple à fabriquer, le cas échéant à rééquiper, et dans laquelle la nuisance acoustique, produite normalement par le jeu entre l'axe et l'orifice, initialement Iprésent ou créé à l'usage au cours de la vie du bac, soit évitée.

Cet objectif est atteint par un bac conforme à la revendication 1. La sollicitation en force peut être alors choisie, de manière préférentielle, perpendiculairement à la direction de l'axe. La force peut être provoquée, par exemple, par un élément générateur de force formant moyen de sollicitation, l'élément étant disposé entre le corps du bac et l'axe, de sorte que la force agit également entre le corps et l'axe et presse l'axe sur un bord intérieur d'un des orifices.

Grâce à l'invention, l'axe est pressé en permanence par les moyens de sollicitation contre la zone intérieure de l'orifice, de préférence des orifices, dont le bord entoure totalement l'axe. Cette sollicitation est indépendante du fait qu'il existe initialement, dès la fabrication et l'assemblage du bac, un jeu de l'axe par rapport aux orifices ou que le jeu soit apparu ultérieurement par usure.

On obtient ainsi que l'axe est en appui en permanence, c'est-à-dire notamment pendant le transport du bac, sur l'orifice en au moins un point, de préférence sur une zone de contact interne à l'orifice relativement étendue, de sorte que cela empêche un battement de l'axe à l'intérieur de l'orifice lors du transport du bac. Cela atténue ainsi les bruits dues à la vibration de l'axe et aux chocs de l'axe contre l'orifice.

Dans un mode de réalisation préférentiel, la force, qui agit pour la sollicitation de l'axe contre l'orifice, contrecarre au moins sensiblement la force de gravité. Dans ce mode de réalisation, la direction de la force est choisie en conséquence de telle sorte que cette dernière soit orientée sensiblement dans la direction verticale vers le haut, si bien que l'axe est pressé contre la zone intérieure supérieure de l'orifice.

Du fait du poids du bac , en particulier lorsque le bac est chargé, la force active exercée par les moyens de sollicitation entre l'axe et la zone de bordure intérieure de l'orifice est amplifiée. Ainsi l'effet selon l'invention de réduction des vibrations de l'axe par rapport à l'orifice est complété par la hausse du poids du bac lors de son chargement. La force des moyens de sollicitation presse ainsi l'axe essentiellement du bas vers le haut contre le bord de l'orifice et la force pondérale presse en outre le bord de l'orifice contre l'axe, car ce dernier est supporté sur le fond par l'intermédiaire des bords.

Le fait que la force des moyens de sollicitation contrecarre au moins sensiblement la force de gravité ne signifie pas que la force des moyens de sollicitation est dirigée exactement à l'encontre de la force de pesanteur et ainsi exactement dans la direction verticale, mais que, lors d'une décomposition de la force en deux composantes, au moins la composante dans une direction verticale est dominante, c'est-à-dire est plus élevée que la composante de force de l'autre direction.

Dans un mode de réalisation, il peut être ici prévu que l'axe soit sollicité en force dans et/ou sur chaque orifice, dans lequel est inséré l'axe. Cela permet d'empêcher efficacement le battement de l'axe à l'intérieur de l'orifice.

Il est particulièrement préférentiel que l'axe soit sollicité en force au moins contre les orifices dont le bord entoure totalement l'axe. En complément, la sollicitation en force peut être également prévue contre les orifices dont la bordure recouvre l'axe à partir du haut et sont ouverts en direction du bas.

Les orifices qui entourent l'axe totalement par leur bordure, pour le maintenir fermement, peuvent être ménagés dans des nervures séparées et conformées en saillie du corps du bac, vers le bas. Ces nervures peuvent être réalisées d'un seul tenant avec le bac, notamment lorsque le bac est monobloc et réalisé par moulage par injection de matière plastique.

Pour réaliser une sollicitation en force selon l'invention, on prévoit selon un mode de réalisation préférentiel que les moyens de sollicitation comprennent au moins un élément à ressort, disposé sur le corps du bac, au moyen duquel s'effectue la sollicitation en force de l'axe dans l'orifice. Un tel élément à ressort forme ainsi l'élément générateur de force préalablement cité.

L'élément à ressort peut être de type quelconque et est conformé de sorte que, lorsqu'il est disposé sur le corps du bac, il exerce une force sur l'axe pour le presser sur une zone intérieure d'au moins l'un des orifices et provoquer ainsi un contact intime entre l'axe et la zone de bordure intérieure de l'orifice. Cela fait alors disparaître le jeu entre l'axe et l'orifice, au moins dans une direction perpendiculaire à l'axe.

Dans un mode de réalisation préférentiel, l'élément à ressort comprend une première extrémité qui entoure l'axe au moins en partie et une seconde extrémité fixée au corps du bac, en particulier au-dessus de l'orifice, l'élément à ressort se composant en particulier d'un acier à ressorts ou d'un fil d'acier pour ressort. Grâce à la fixation de l'élément à ressort au-dessus de l'orifice par la seconde extrémité et à l'axe par la première extrémité, la sollicitation en force s'effectue au moins essentiellement à l'encontre de la force de gravité, comme décrit en introduction, dans la mesure où l'élément à ressort est un élément qui déploie son effet de force en traction. Il est pareillement possible en variante d'utiliser des éléments à ressorts de compression, qui agissent sur l'axe par l'une de leurs extrémités et dont l'autre extrémité est fixée sur le corps par exemple au-dessous de l'axe, pour générer ainsi la force agissant vers le haut à l'encontre de la force de pesanteur.

Dans la solution citée en introduction d'un élément à ressort agissant en traction, il peut être alors prévu de manière particulièrement préférentielle qu'une extrémité entoure l'axe au moins en partie à la manière d'un crochet et que l'autre extrémité soit pareillement configurée en forme de crochet et s'insère sur le corps du bac dans un trou de fixation. Un tel trou de fixation peut être disposé par exemple au-dessus de l'orifice pour le passage de l'axe dans le corps, par exemple dans une nervure qui dépasse vers le bas du fond du corps.

Un élément à ressort de ce type peut se composer par exemple d'un ressort en acier, qui est réalisé sous forme d'un fil ou d'une bande plate (par exemple sous forme d'un ressort à lames) et dont l'une de ses extrémités est configurée en crochet et est adaptée au diamètre de l'axe et dont l'autre extrémité est en forme de crochet et est adaptée par exemple au trou de fixation qui est prévu au-dessus de l'orifice pour l'axe sur le corps du bac pour loger cette extrémité en forme de crochet dans le trou.

Grâce à la fixation de l'élément à ressort dans le trou de fixation et au recouvrement de l'axe par l'élément, la sollicitation en force conforme à l'invention, est durablement obtenue. Le trou peut par ailleurs être ménagé dans le bac après sa fabrication. En particulier avec une configuration de l'élément à ressort en forme de crochet, il peut être prévu que les deux crochets soient disposés dans des plans mutuellement perpendiculaires, pour obtenir une fixation plus simple aussi bien sur l'axe que dans le trou de fixation agencé sur le bac dans une nervure en saillie vers le bas, cette nervure s'étendant alors essentiellement de façon perpendiculaire à l'axe et présentant un orifice pour le passage de ce dernier. Dans un autre mode de réalisation, il peut être également prévu que l'autre extrémité de l'élément à ressort soit fixée sur le corps par vissage ou rivetage.

Dans un mode de réalisation alternatif, il peut être également prévu que l'élément à ressort soit réalisé d'une seule pièce avec le corps du bac. C'est ainsi qu'un tel élément à ressort peut être formé par exemple par un matériau élastomère, injecté sur le corps, ou bien par le matériau du corps lui-même.

Il peut être par exemple prévu à cet effet qu'un tel élément à ressort soit disposé aux alentours de l'orifice qui sert au passage de l'axe. Lors de la mise en place de l'axe dans l'orifice, l'élément à ressort, disposé aux alentours de l'orifice, exerce conformément à l'invention la force sur l'axe et presse ce dernier à l'intérieur de l'orifice contre son bord intérieur, en particulier contre la zone supérieure du bord intérieur.

Dans un autre mode de réalisation préférentiel, l'élément à ressort est disposé à l'intérieur de l'orifice pour recevoir l'axe.

Un tel élément à ressort peut être par exemple configuré sous forme d'une patte, qui dépasse dans l'intérieur de l'orifice. Une telle patte peut se composer du matériau du corps (par exemple dans le cas d'une fabrication monobloc) ou bien d'un autre matériau. C'est ainsi que l'orifice pour recevoir l'axe peut être réalisé avec une section transversale circulaire, d'un diamètre adapté au diamètre de l'axe, au moins une patte dépassant dans la direction radiale dans l'intérieur de l'orifice, au moins en un endroit, la patte étant en saillie de la zone intérieure de l'orifice, l'orifice étant en particulier fermé en bordure.

Il est ainsi possible de plier la patte perpendiculairement à son plan lors de l'insertion de l'axe dans l'orifice et que la sollicitation en force s'effectue alors sur l'axe lorsqu'il est en place par la force de rappel active de la patte qui tend à reprendre sa position initiale. Dans un autre mode de réalisation préférentiel, la patte est disposée dans une zone inférieure de l'orifice, pour que la sollicitation en force s'effectue vers le haut, c'est-à-dire essentiellement à l'encontre de la force de gravité.

Dans un autre mode de réalisation, une lumière est disposée au voisinage de l'orifice, en particulier au-dessous de l'orifice prévu pour le logementde l'axe, de sorte que la lumière et l'orifice sont séparés l'un de l'autre par un pont de matière, ou traverse, le pont pouvant être alors déplacé, au moins par zones, vers l'intérieur de l'orifice par un élément pouvant être mis en place dans la lumière.

Il est alors possible de prévoir dans un mode de réalisation que ce pont soit déplacé par l'insertion de l'axe dans l'orifice et que la sollicitation en force s'effectue par la force de rappel du pont vers l'orifice ou bien, dans un autre mode de réalisation, qu'un déplacement du pont vers l'axe s'effectue grâce à un élément mis en place dans la lumière et exerçant ainsi une force sur l'axe.

Dans le sens du mode de réalisation préalablement cité dans lequel la force de sollicitation est exercée à l'encontre de la force de gravité, il peut être prévu que l'orifice et la lumière soient disposés l'un au-dessous de l'autre, en particulier que l'orifice pour le logement et le passage de l'axe soit disposé au-dessus de la lumière, de sorte que le pont déplacé de l'une ou de l'autre manière soit disposé au-dessous de l'axe.

Selon un autre mode de réalisation, l'orifice pour recevoir l'axe, en particulier lorsque l'orifice entoure totalement l'axe par son bord, est configuré de telle sorte qu'il présente localement, en particulier dans sa zone inférieure, un diamètre plus petit que dans la zone restante, donc en particulier une section transversale différente vers l'intérieur de la forme circulaire. Ce diamètre plus petit peut être alors en particulier choisi de sorte qu'il soit inférieur au diamètre de l'axe à mettre en place et/ou mis en place dans cet orifice. Alors, lors de la mise en place de l'axe, du fait de l'élasticité inhérente au matériau et de la déformation du matériau dans la zone du diamètre plus petit, il s'exerce une force de rappel qui produit la sollicitation en force dans le sens de l'invention. C'est ainsi qu'une telle sollicitation en force peut être généralement provoquée par une forme de l'orifice, destiné au logement et au passage d'un axe, différente de la forme circulaire, un tel orifice présentant alors au moins dans une direction perpendiculaire à l'axe un diamètre plus petit que le diamètre de l'axe, pour obtenir ainsi la sollicitation en force souhaitée.

Des modes de réalisation de l'invention sont représentés dans les dessins ci-dessous :
- Figure 1 : une vue d'ensemble d'un axe monté dans une zone inférieure d'un bac de collecte de déchets, avec une roue sous-jacente.
- Figure 2 : une vue détaillée d'un orifice pour le passage de l'axe selon deux coupes, avec un élément à ressort mis en place.
- Figure 2a : une fixation alternative de l'élément à ressort suivant la figure 2.
- Figure 3 : un mode de réalisation alternatif d'un élément à ressort monobloc avec le corps.
- Figure 4 : une sollicitation en force par déformation de la zone de bordure d'un orifice.

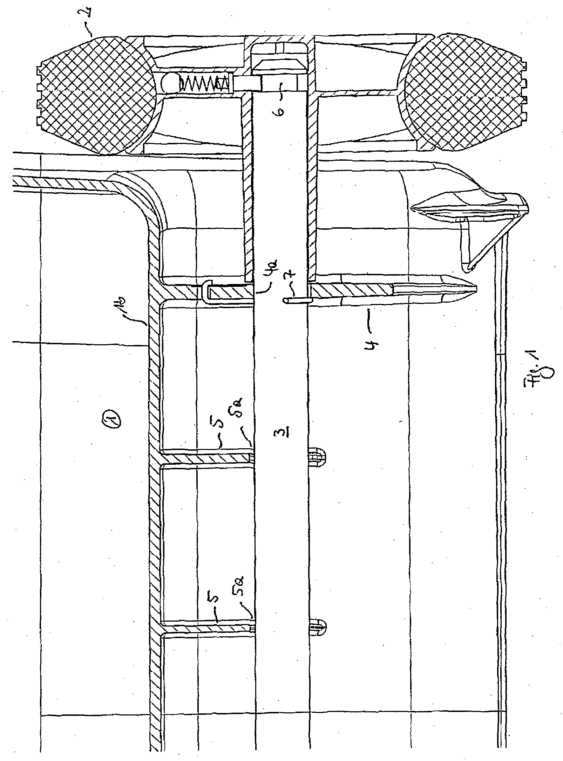

La figure 1 montre dans une vue d'ensemble la zone inférieure d'un bac de collecte de déchets 1, uniquement une roue latérale 2 étant ici représentée sur un axe 3 fixé dans la zone inférieure du bac 1.

Pour la fixation de l'axe 3 dans la zone inférieure du bac, le bac comprend des nervures 4 s'étendant vers le bas perpendiculairement à l'axe à partir de la zone de fond inférieure 1 b. Au moins les nervures latérales extérieures présentent un orifice 4a fermé en bordure, au travers duquel est guidé l'axe 3. De telles nervures 4 sont ici prévues des deux côtés du bac, qui comprend ainsi au moins deux nervures pour un axe.

Dans ce mode de réalisation, l'orifice 4a dans la nervure est configuré de telle sorte que, pour recevoir l'axe 3 de section transversale circulaire, l'orifice 4a présente également une section transversale circulaire dont le diamètre est plus grand que celui de l'axe 3, pour pouvoir emmancher facilement ce dernier au travers de l'orifice 4a, un jeu entre l'axe 3 et le bord intérieur de l'orifice 4a en résultant toutefois de ce fait.

Il est ici prévu en complément que soient disposées, entre deux nervures latérales extérieures 4, dont une seule est représentée ici, d'autres nervures 5 qui s'étendent vers le bas à partir de la zone de fond 1 b du bac et présentent des orifices 5a, qui sont ouverts en direction du bas et n'entourent pas en conséquence l'axe 3, comme cela est le cas pour les orifices 4a, mais le soutiennent uniquement.

Il est en outre représenté ici qu'une roue 3 est emmanchée sur l'extrémité du côté droit de l'axe 3, laquelle est fixée par un mécanisme de verrouillage, réalisé dans la roue, avec une cheville chargée par ressort dans la direction radiale sur une gorge 6 du côté extrême de l'axe 3.

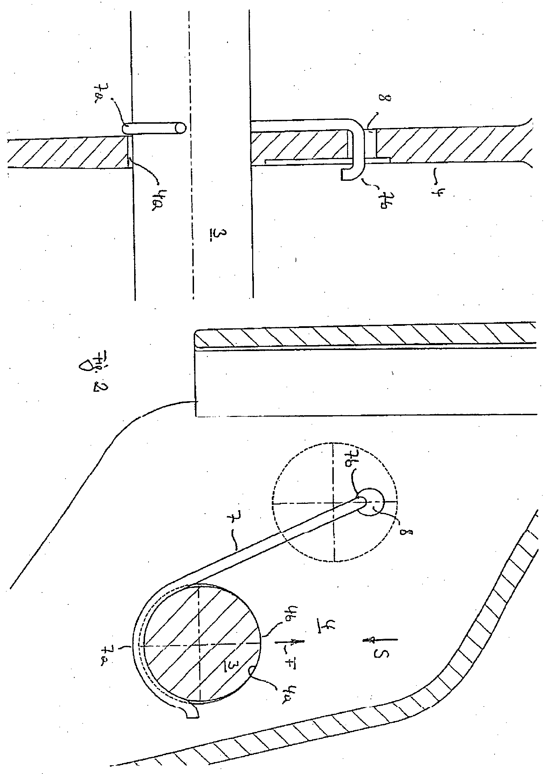

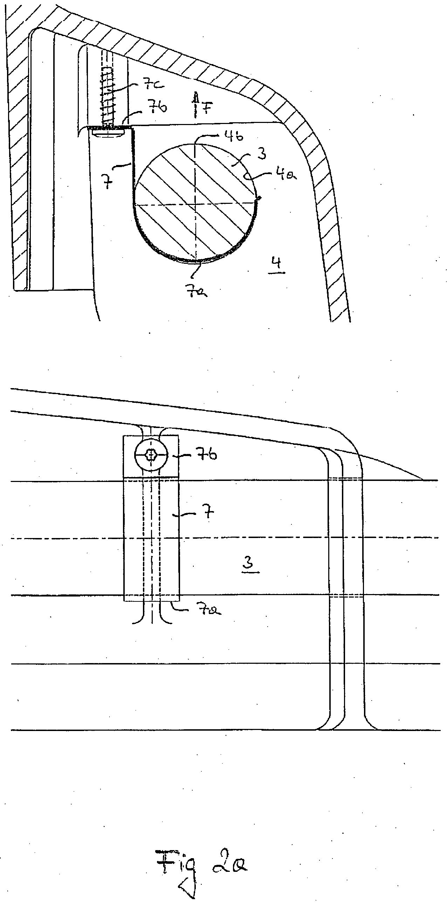

Pour empêcher maintenant, lors de transports du bac, un battement entre l'axe 3 et la zone de bordure intérieure de l'orifice 4a, il est prévu de générer la sollicitation en force, souhaitée conformément à l'invention, au moyen d'un élément à ressort 7 qui présente dans ce mode de réalisation des extrémités bilatérales en forme de crochet, disposées en outre dans ce mode de réalisation dans des plans perpendiculaires entre eux. Cette réalisation est représentée dans le détail sur la figure 2.

Il apparaît ici de nouveau la nervure 4, déjà représentée sur la figure 1, avec l'orifice 4a traversé par l'axe 3. L'élément à ressort 7 entoure l'axe 3 par une extrémité inférieure 7a en forme de crochet, dont le rayon de courbure est adapté au diamètre et/ou au rayon de l'axe 3, et est guidé par son extrémité supérieure 7b en forme de crochet au travers d'un trou 8, l'élément à ressort 7 étant fixé de ce fait sur le corps du bac, c'est-à-dire ici concrètement dans la nervure 4.

Il est visible ici que n'importe quel bac standard 1 peut être rééquipé d'un tel élément à ressort 7 en réalisant postérieurement à sa fabrication un alésage formant trou de fixation 8 dans la nervure 4, cet élément à ressort 7 étant d'abord mis en place par le petit crochet 7b dans le trou 8, puis fixé autour de l'axe 3 par le crochet inférieur 7a de configuration plus grande.

L'effet de force est ici généré du fait que l'élément à ressort est fabriqué par exemple en un fil d'acier pour ressort, acier à ressorts ou analogues et est formé de sorte que l'écartement entre l'orifice 4a et le trou 8 dans la nervure 4 est supérieur à l'écartement entre les extrémités 7a et 7b en forme de crochet, de sorte que ces extrémités sont repoussées l'une de l'autre par la pose de l'élément à ressort 7 sur la nervure du corps 1 et sur l'axe 3.

Il est clair dans la partie droite de la figure 2 qu'une force F, contrecarrant la force de gravité S, est générée par l'élément à ressort 7, laquelle force presse sans jeu l'axe 3 sur la zone supérieure 4b de l'orifice 4a. Il est obtenu de ce fait que, lors d'un transport du bac par roulage, l'axe 3 ne puisse plus claquer en va-et-vient à l'intérieur de l'orifice 4a et que la nuisance acoustique soit de ce fait considérablement réduite.

Le contact effectif entre la zone supérieure de l'axe 3 et la zone supérieure 4b de l'orifice 4a sera alors dans la pratique plus étendu que ponctuel, car le matériau du corps et/ou de la nervure 4 est normalement une matière plastique, qui se déforme au moins légèrement sous l'effet de la sollicitation en force, de sorte qu'un contact de plus grande surface, en particulier linéaire ou plan, s'établit entre l'axe 3 et la zone de bordure intérieure 4b de l'orifice 4a, l'axe 3 étant de ce fait maintenu de façon sûre et immobile, en particulier sans jeu à l'intérieur de l'orifice 4a.

Il est également clair ici que le trou 8 pour le logement du crochet supérieur 7b de l'élément à ressort 7 est disposé au-dessus de l'orifice 4a pour le passage de l'axe 3, pour provoquer de ce fait, après la mise en place d'un élément à ressort 7, que la sollicitation par la force F s'effectue au moins essentiellement à l'encontre de la direction S de la force de gravité. Il est ici évident, par l'inclinaison de la zone de jonction entre le crochet supérieur et le crochet inférieur de l'élément à ressort 7, que la composante de force essentielle (supérieure) s'étend dans la direction verticale à l'encontre de la force de gravité S.

Il est en outre clair pour l'homme du métier, même si cela n'est pas représenté sur la figure, que l'élément à ressort 7 montré ici ou d'une manière générale tout élément de génération de force, peut être prévu non seulement sur les orifices 4a qui entourent totalement l'axe 3 , mais aussi sur des orifices, qui ne recouvrent que le haut de l'axe 3, comme pour les orifices 5a des nervures 5.

Par rapport au mode de réalisation de la figure 2, la figure 2a montre une autre réalisation possible d'un élément à ressort 7, dont l'extrémité inférieure plus grande 7a en forme de crochet, comme sur la figure 2, entoure l'axe 3 et dont l'extrémité 7b opposée est uniquement pliée et présente un alésage pour le passage d'une vis 7c, de sorte que cette extrémité peut être vissée avec le corps du bac et/ou d'une nervure 4. Là encore, une force F essentiellement dirigée vers le haut et ainsi opposée à la force de gravité S est générée par l'élément à ressort 7, laquelle force fait que l'axe 3 est pressé sur la zone supérieure intérieure 4b de l'orifice 4a et que cette zone est ainsi pressée sans jeu entre l'axe 3 et l'orifice 4a.

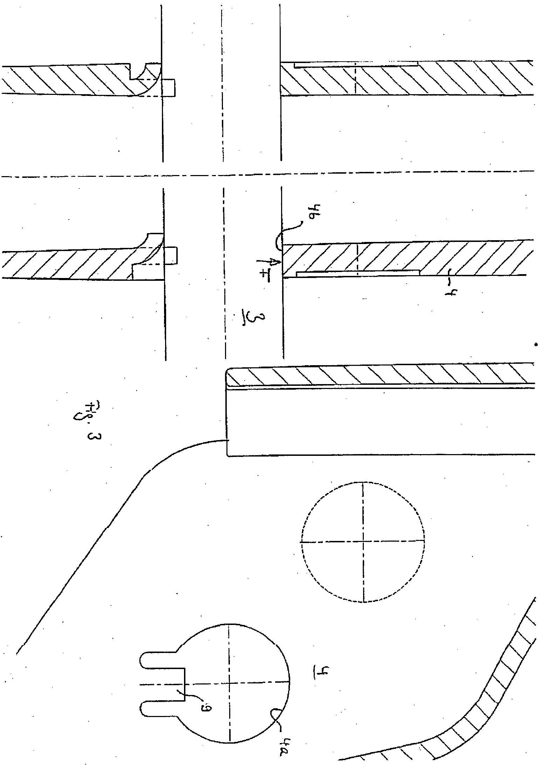

La figure 3 montre une autre variante de réalisation de la solution conforme à l'invention, dans laquelle l'orifice 4a à l'intérieur de la nervure 4, au-dessous de la zone de fond du bac, est possède un diamètre adapté au diamètre de l'axe 3 à y loger, c'est-à-dire supérieur au diamètre de l'axe, l'orifice comprenant en outre une patte 9dépassant du bas selon la direction radiale dans l'intérieur de l'orifice 4a. Par la mise en place de l'axe 3 dans l'orifice 4a, comme montré du côté gauche de la figure, la patte 9 est pliée en direction d'un côté, la sollicitation en force étant alors générée par la force de rappel s'établissant, qui tend à redresser la patte 9, de sorte que, là encore, l'axe 3 est pressé par la force active F sur la zone supérieure 4b de l'orifice 4a, si bien qu'aucun jeu n'existe plus entre l'axe 3 et le bord de l'orifice.

Il peut être prévu dans ce mode de réalisation que la patte 9 se compose du même matériau que la nervure dans laquelle est réalisé l'orifice 4a, donc par exemple de matière plastique, et soit sur ce point également configurée d'une seule pièce avec le corps du bac pendant l'opération de moulage par injection.

En complément, il peut être prévu ici de placer sur la patte un capuchon métallique ou un crochet métallique, pour accroître l'effet de ressort. Le cas échéant, il peut être également prévu de fixer un élément à ressort métallique à la manière de la patte 9 dans la zone de bordure de l'orifice 4a, de sorte que cet élément dépasse radialement dans l'intérieur.

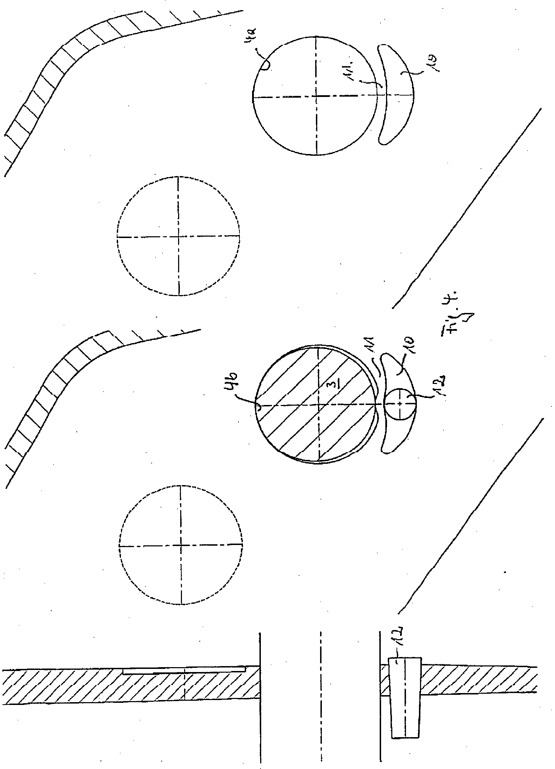

La figure 4 représente un mode de réalisation alternatif, dans lequel une lumière 10 est disposée au-dessous de l'orifice 4a pour loger l'axe 3, de sorte que les deux orifices sont reliés par un pont de matière 11.

L'orifice 4a présente alors une forme circulaire d'un diamètre plus grand que le diamètre de l'axe 3 à y loger, comme le montre la représentation du côté gauche de la figure. Un autre élément 12 peut être maintenant mis en place dans la lumière inférieure 10, le pont 11 étant de ce fait déformé et/ou déplacé au moins par zones, pressé dans la zone inférieure de l'orifice 4a contre l'axe 3 et générant ainsi une sollicitation en force, opposée à la force de gravité, de sorte que le contact de l'axe 3 dans la zone supérieure 4b sur l'orifice 4a est produit de ce fait.

La sollicitation en force est ici provoquée sans aucun élément à ressort, dans la mesure où l'élasticité du matériau du pont 11 et éventuellement de l'élément 12 est négligée. Mais une telle élasticité est au demeurant toujours présente normalement, dans la mesure où le matériau est une matière plastique utilisée typiquement, de sorte que, en complément de la force de serrage pure par le déplacement du pont 11 avec l'élément 12 mis en place, des forces élastiques agissent également par la tendance à annuler la déformation élastique dans la zone de contact entre le pont 11 et l'axe 3.

Tous les modes de réalisation représentés ici montrent plusieurs possibilités conformes à l'invention d'obtenir une sollicitation en force de l'axe du bac, pour obtenir que cet axe soit en contact avec une zone intérieure de l'orifice, au moins ponctuellement, de préférence le long d'une ligne de contact ou d'une surface de contact. Un contact entre l'axe et le bord intérieur de l'orifice est de ce fait produit, lequel contact est sans jeu, de sorte que des bruits de battement de l'axe sur l'orifice lors du transport du bac sont efficacement empêchés.

Pour tous les modes de réalisation, il convient de constater que les caractéristiques techniques, citées en liaison avec un mode de réalisation, sont utilisables non seulement pour la réalisation spécifique, mais également pour les autres réalisations respectives. Toutes les caractéristiques techniques révélées de cette description de l'invention sont à classer comme étant essentielles de l'invention et sont utilisables en combinaison mutuelle quelconque ou isolément.

## Revendications

1. Bac de collecte de déchets comprenant un corps et au moins un axe (3) rigide disposé à l'extrémité inférieure (1b) du corps , une roue (2) étant montée mobile en rotation à chaque extrémité de l'axe (3), le corps comprenant au moins deux orifices (4a) dans lesquels est inséré l'axe (3), **caractérisé en ce qu'**il comprend des moyens de sollicitation de l'axe (3) exerçant une force (F) sur l'axe, notamment perpendiculairement à la direction de l'axe, les moyens étant agencés pour que l'axe (3) soit pressé sans jeu par la force (F) de sorte que l'axe soit apte à être directement en contact avec au moins une zone intérieure (4b) d'au moins des orifices (4a).

2. Bac de collecte de déchets suivant la revendication 1, dans lequel la force (F) contrecarre au moins sensiblement la force de gravité (S).

3. Bac de collecte de déchets suivant l'une des revendications précédentes, dans lequel l'axe (3) est sollicité en force dans/sur chaque orifice (4a, 5a) dans lequel est inséré l'axe (3).

4. Bac de collecte de déchets suivant l'une des revendications précédentes, dans lequel les moyens de sollicitation comprennent au moins un élément à ressort (7, 9), disposé sur le corps du bac, au moyen duquel s'effectue la sollicitation en force de l'axe.

5. Bac de collecte de déchets suivant la revendication 4, dans lequel l'élément à ressort (7) comprend une première extrémité (7a) entourant l'axe (3) au moins en partie et une seconde extrémité (7b) reliée au corps du bac, en particulier au-dessus de l'orifice (4a), l'élément à ressort se composant en particulier d'un acier à ressorts ou d'un fil d'acier pour ressort.

6. Bac de collecte de déchets suivant la revendication 5, dans lequel la seconde extrémité (7b) est configurée en forme de crochet et est insérée dans un trou (8) ménagé dans le corps et/ou dans une nervure (4) du corps.

7. Bac de collecte de déchets suivant l'une des revendications précédentes 4 à 6, dans lequel l'élément à ressort (7) est configuré en forme de crochet à deux extrémités (7a, 7b), les deux extrémités (7a, 7b) étant disposées dans des plans mutuellement perpendiculaires.

8. Bac de collecte de déchets suivant l'une des revendications 4-7, dans lequel l'élément à ressort (9) est réalisé d'un seul tenant avec le corps.

9. Bac de collecte de déchets suivant l'une des revendications 4-7, dans lequel l'élément à ressort (9) est disposé dans un des orifices (4a).

10. Bac de collecte de déchets suivant la revendication 9, dans lequel l'élément à ressort est configuré sous forme d'une patte (9), qui dépasse dans l'intérieur de l'orifice (4a), en particulier de telle sorte que la patte (9), lors de l'insertion d'un axe (3) dans l'orifice (4a), est pliée perpendiculairement à son plan, la sollicitation en force (F) de l'axe dans l'orifice s'effectuant alors par la force de rappel de la patte.

11. Bac de collecte de déchets suivant la revendication précédente, dans lequel la patte (9) est disposée dans la zone inférieure de l'orifice (4a).

12. Bac de collecte de déchets suivant l'une des revendications précédentes, comprenant une lumière (10) ménagée au voisinage de l'orifice (4a), en particulier au-dessous de l'orifice (4a), de sorte que l'orifice et la lumière (4a, 10) sont séparés par un pont de matière (11), le pont de matière (11) pouvant être déplacé, au moins partiellement, vers l'intérieur de l'orifice (4a), par un élément (12) apte à être mis en place dans la lumière (10).

## Patentansprüche

1. Behälter zum Sammeln von Abfällen, umfassend einen Körper und mindestens eine starre Achse (3), die am unteren Ende (1 b) des Körpers angeordnet ist, wobei ein Rad (2) an jedem Ende der Achse (3) drehbeweglich gelagert ist, wobei der Körper mindestens zwei Öffnungen (4a) aufweist, in welche die Achse (3) eingesetzt ist, **dadurch gekennzeichnet, dass** er Mittel zum Beaufschlagen der Achse (3) aufweist, die eine Kraft (F) auf die Achse ausüben, insbesondere senkrecht zu der Richtung der Achse, wobei die Mittel so eingerichtet sind, dass die Achse (3) ohne Spiel durch die Kraft (F) gepresst wird, so dass die Achse mit mindestens einem inneren Bereich (4b) mindestens einer der Öffnungen (4a) direkt in Kontakt treten kann.

2. Behälter zum Sammeln von Abfällen nach Anspruch 1, wobei die Kraft (F) zumindest deutlich der Schwerkraft (S) entgegenwirkt.

3. Behälter zum Sammeln von Abfällen nach einem der vorhergehenden Ansprüche, wobei die Achse (3) in/an jeder Öffnung (4a, 5a), in welche die Achse (3) eingesetzt ist, mit Kraft beaufschlagt ist.

4. Behälter zum Sammeln von Abfällen nach einem der vorhergehenden Ansprüche, wobei die Beaufschlagungsmittel mindestens ein Federelement (7, 9) umfassen, das an dem Körper des Behälters angeordnet ist und über das die Beaufschlagung der Achse mit Kraft erfolgt.

5. Behälter zum Sammeln von Abfällen nach Anspruch 4, wobei das Federelement (7) ein erstes Ende (7a) aufweist, das die Achse (3) mindestens zum Teil umgibt, und ein zweites Ende (7b) aufweist, das mit dem Körper des Behälters verbunden ist, insbesondere oberhalb der Öffnung (4a), wobei das Federelement insbesondere aus einem Federstahl oder aus einem Stahldraht für Federn besteht.

6. Behälter zum Sammeln von Abfällen nach Anspruch 5, wobei das zweite Ende (7b) in Form eines Hakens ausgebildet ist und in ein Loch (8) eingesetzt ist, das in dem Körper und/oder in einer Rippe (4) des Körpers vorgesehen ist.

7. Behälter zum Sammeln von Abfällen nach einem der vorhergehenden Ansprüche 4 bis 6, wobei das Federelement (7) in Form eines Hakens mit zwei Enden (7a, 7b) ausgebildet ist, wobei die zwei Enden (7a, 7b) in gegenseitig senkrechten Ebenen angeordnet sind.

8. Behälter zum Sammeln von Abfällen nach einem der vorhergehenden Ansprüche 4 bis 7, wobei das Federelement (9) einteilig mit dem Körper ausgeführt ist.

9. Behälter zum Sammeln von Abfällen nach einem der vorhergehenden Ansprüche 4 bis 7, wobei das Federelement (9) in einer der Öffnungen (4a) angeordnet ist.

10. Behälter zum Sammeln von Abfällen nach Anspruch 9, wobei das Federelement in Form einer Klaue (9) ausgebildet ist, die in das Innere der Öffnung (4a) übersteht, insbesondere dergestalt, dass die Klaue (9) beim Einsetzen einer Achse (3) in die Öffnung (4a) senkrecht zu ihrer Ebene geknickt wird, wobei die Beaufschlagung der Achse mit Kraft (F) in der Öffnung dann durch die Rückstellkraft der Klaue erfolgt.

11. Behälter zum Sammeln von Abfällen nach dem vorhergehenden Anspruch, wobei die Klaue (9) im unteren Bereich der Öffnung (4a) angeordnet ist.

12. Behälter zum Sammeln von Abfällen nach einem der vorhergehenden Ansprüche, umfassend einen Schlitz (10), der in der Nähe der Öffnung (4a) vorgesehen ist, insbesondere unterhalb der Öffnung (4a), so dass die Öffnung und der Schlitz (4a, 10) durch eine Materialbrücke (11) getrennt sind, wobei die Materialbrücke (11) mindestens teilweise durch ein Element (12), das in den Schlitz (10) einsetzbar ist, zu dem Inneren der Öffnung (4a) hin bewegt werden kann.

## Claims

1. Waste collection bin comprising a body and at least one rigid axle (3) arranged at the lower end (1 b) of the body, a wheel (2) being rotatably mounted at each end of the axle (3), the body comprising at least two orifices (4a) into which the axle (3) is inserted, **characterised in that** it comprises means for pressing on the axle (3) exerting a force (F) on the axle, in particular perpendicularly to the direction of the axle, the means being arranged so that the axle (3) is pressed without clearance by the force (F) so that the axle can be directly in contact with at least one inner area (4b) of at least one of the orifices (4a).

2. Waste collection bin according to claim 1, wherein the force (F) counteracts at least substantially the force of gravity (S).

3. Waste collection bin according to one of the preceding claims, wherein force is applied on the axle (3) pressing it into/on each orifice (4a, 5a) into which the axle (3) is inserted.

4. Waste collection bin according to one of the preceding claims, wherein the means for applying force comprise at least one spring element (7, 9) arranged on the body of the bin, used to apply force on the axle.

5. Waste collection bin according to claim 4, wherein the spring element (7) comprises a first end (7a) surrounding the axle (3) at least partly and a second end (7b) connected to the body of the bin, in particular above the orifice (4a), the spring element consisting in particular of spring steel or a spring steel wire.

6. Waste collection bin according to claim 5, wherein the second end (7b) is configured as a hook and is inserted in a hole (8) formed in the body and/or in a rib (4) of the body.

7. Waste collection bin according to one of the preceding claims 4 to 6, wherein the spring element (7) is configured as a hook with two ends (7a, 7b), the two ends (7a, 7b) being arranged in mutually perpendicular planes.

8. Waste collection bin according to one of claims 4 to 7, wherein the spring element (9) is formed integrally with the body.

9. Waste collection bin according to one of claims 4 to 7, wherein the spring element (9) is arranged in one of the orifices (4a).

10. Waste collection bin according to claim 9, wherein the spring element is configured as a lug (9) projecting inside the hole (4a), in particular such that the lug (9), when inserting an axle (3) into the orifice (4a) is bent perpendicularly to its plane, the force (F) pressing the axle into the orifice then being applied by the return force of the lug.

11. Waste collection bin according to the preceding claim, wherein the lug (9) is arranged in the lower area of the orifice (4a).

12. Waste collection bin according to one of the preceding claims, comprising a hole (10) formed near the orifice (4a), in particular below the orifice (4a), such that the orifice and the hole (4a, 10) are separated by a bridge of material (11), it being possible to move the bridge of material (11), at least partly, towards the inside of the orifice (4a) by an element (12) that can be placed in the hole (10).
